# EUROPEAN PATENT APPLICATION

(11) **EP 4 102 498 A1**
(43) Date of publication of application: **14.12.2022**
(21) Application number: 22164036.0
(22) Date of filing: 24.03.2022
(51) Int. Cl.: G10L 15/01, G06F 3/16, G10L 15/22

(54) **METHOD FOR DETERMINING VOICE RESPONSE SPEED, RELATED DEVICE AND COMPUTER PROGRAM PRODUCT**

(30) Priority: 08.06.2021 CN 202110636622
(71) Applicant: Apollo Intelligent Connectivity (Beijing) Technology Co., Ltd., Beijing 100176 (CN)
(72) Inventor: ZHANG, Fuyu, Beijing 100176 (CN); LIU, Rong, Beijing 100176 (CN); WANG, Kun, Beijing 100176 (CN)
(74) Representative: Gill Jennings & Every LLP

(57) **Abstract**

Embodiments of the present disclosure provides a method and device for determining voice response speed, an electronic equipment, computer-readable storage medium, and computer program product, relate to the fields of artificial intelligence technology such as voice recognition, natural language processing, deep learning, and the like. The method comprises: reading a data stream constituting a test audio file, and determining a time point when a complete data stream is read as an interaction start time point; determining a voice instruction information contained in a complete data stream, and determining an execution time point of an action indicated by the voice instruction information as an interaction end time point; and determining the voice response speed based on the interaction start time point and the interaction end time point.

## Description

### TECHNICAL FIELD

Embodiments of the present disclosure relate to the field of data processing technology, in particular to the fields of artificial intelligence technology such as voice recognition, natural language processing, and deep learning, and in particular to method, device, electronic equipment, computer-readable storage medium, and computer program product for determining voice response speed.

### BACKGROUND

End-to-end voice response speed usually refers to the time length from the moment when voice input from outside to a machine is stopped until the machine executes the user's intention. This end-to-end voice response speed is an important indicator for evaluating the effect of voice recognition. The response speed directly affects the user's experience.

At present, methods of counting end-to-end voice response speed are mostly determined by manually selecting the start time and end time of entire test video, which requires assistance of at least two devices.

### SUMMARY

Embodiments of the present disclosure propose a method and a device for determining voice response speed, an electronic device, a computer-readable storage medium, and a computer program product.

In a first aspect, an embodiment of the present disclosure provides a method for determining voice response speed, the method comprises: reading a data stream constituting a test audio file, and determining a time point when a complete data stream is read as an interaction start time point; determining voice instruction information contained in a complete data stream, and determining an execution time point of an action indicated by the voice instruction information as an interaction end time point; and determining the voice response speed based on the interaction start time point and the interaction end time point.

In a second aspect, an embodiment of the present disclosure provides a device for determining voice response speed, the device comprises: a data stream reading and start time determination unit, which is configured to read a data stream constituting a test audio file, and determine a time point when a complete data stream is read as an interaction start time point; an indication information determination and end time determination unit, which is configured to determine voice instruction information contained in the complete data stream, and determine an execution time point of an action indicated by the voice instruction information as an interaction end time point; and a voice response speed determination unit, which is configured to determine the voice response speed based on the interaction start time point and the interaction end time point.

In a third aspect, an embodiment of the present disclosure provides an electronic device, which comprises: at least one processor; and a memory, in communication connection with the at least one processor; wherein, the memory stores instructions executable by the at least one processor, the instructions, when executed by the at least one processor, cause the at least one processor to implement the method for determining voice response speed as described in any implementation in the first aspect.

In a fourth aspect, an embodiment of the present disclosure provides a non-transitory computer readable storage medium, storing computer instructions thereon, the computer instructions are used to, when executed by a computer, cause the computer to implement the method for determining voice response speed as described in any implementation in the first aspect.

In a fifth aspect, an embodiment of the present disclosure provides a computer program product including a computer program, the computer program can, when executed by a processor, implement the method for determining voice response speed as described in any implementation in the first aspect.

In the method for determining voice response speed provided by the embodiments of the present disclosure, firstly, reading a data stream constituting a test audio file, and determining the time the complete data stream is read as an interaction start time; then, determining voice instruction information included in the complete data stream, and determining the execution time of the action indicated by the voice instruction information as an interaction end time; finally, determining a voice response speed according to the interaction start time and the interaction end time.

Through directly reading the data stream of the test audio file containing the voice instruction information, this method takes the place of the prior art method in which the test device collects the voice signal spoken by the tester or the sound data played by another playback device. Reading the data stream directly can also timely determine the interaction start time without the waiting time for verification. Only a single test device is required to complete the whole automated determination processes, which reduces the number of test equipment, avoids the waiting time for verification, and improves efficiency and cost for determining voice response speed.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

By reading the detailed description of the non-limiting embodiments with reference to the following drawings, other features, purposes and advantages of the present disclosure will become more apparent:
FIG. 1 is an exemplary system architecture to which embodiments of the present disclosure are applicable;
FIG. 2 is a flowchart of the method for determining voice response speed according to an embodiment of the present disclosure;
FIG. 3 is a flowchart of the method for determining the interaction end time point according to an embodiment of the present disclosure;
FIG. 4 is a flowchart of a method for receiving incorrect feedback through broadcasting and performing corresponding processing according to an embodiment of the present disclosure;
FIG. 5 is a flowchart of a method for determining voice response speed according to another embodiment of the present disclosure;
FIG. 6 is a structural block diagram of a device for determining voice response speed according to an embodiment of the present disclosure; and
FIG. 7 is a schematic structural diagram of an electronic device suitable for executing the method for determining voice response speed according to an embodiment of the present disclosure.

### DETAILED DESCRIPTION

The following describes exemplary embodiments of the present disclosure with reference to the accompanying drawings, which includes various details of the embodiments of the present disclosure to facilitate understanding, and they should be considered as merely exemplary. Therefore, those of ordinary skills in the art should recognize that various changes and modifications may be made to the embodiments described herein without departing from the scope and spirit of the present disclosure. Also, for clarity and conciseness, descriptions of well-known functions and structures are omitted in the following description. It should be noted that the embodiments in the present disclosure and the features in the embodiments may be combined with each other if there is no conflict.

In the technical solution of the present disclosure, the acquisition, storage and application of user's personal information involved are in compliance with relevant laws and regulations, necessary confidentiality measures have been taken, and public order and good customs are not violated.

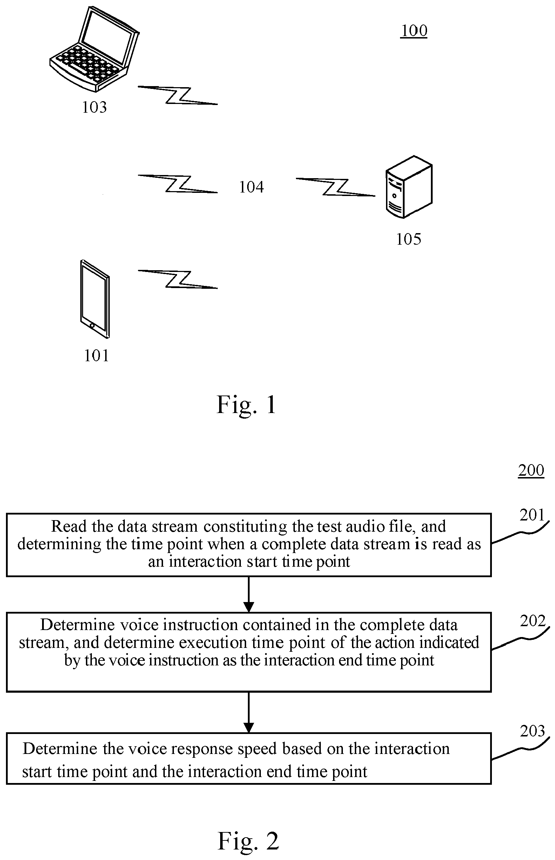

FIG. 1 shows an exemplary system architecture 100 to which embodiments of the method, apparatus, electronic device, and computer-readable storage medium for determining voice response speed of the present disclosure are applicable.

As shown in FIG. 1, the system architecture 100 may include test audio providing terminal(s) 101, 102, and/or 103, a network 104, and a voice response speed determination terminal 105. The network 104 is used as a medium for providing a communication link between the test audio providing terminal(s) 101, 102, 103 and the voice response speed determination terminal 105. The network 104 may include various connection types, such as wired, wireless communication links, fiber optic cables, and the like.

The test audio providing terminals 101, 102, 103 are different carriers storing test audio files, and the test audio files may be transmitted to the voice response speed determination terminal 105 via the network 104. The test audio providing terminal(s) 101, 102, 103 and the voice response speed determination terminal 105 may be installed with various applications for implementing information communication between the two, such as audio file transmission applications, response speed analysis applications, incorrect feedback applications, and the like.

The test audio providing terminals 101, 102, 103 and the voice response speed determination terminal 105 may be hardware or software. When the test audio providing terminals 101, 102, 103 are hardware, they may be various electronic devices with audio file storage and transmission capabilities, including but not limited to smart phones, tablet computers, laptop computers, desktop computers, and the like. When the test audio providing terminals 101, 102, 103 are software, they may be installed in the electronic devices listed above, which may be implemented as multiple software or software modules, or as a single software or software module, which is not specifically limited here. When the voice response speed determination terminal 105 is hardware, it may be implemented as a distributed voice response speed determination terminal cluster composed of multiple voice response speed determination terminals, or as a single voice response speed determination terminal. When the voice response speed determination terminal is software, it may be implemented as multiple software or software modules, or as a single software or software module, which is not specifically limited here.

The voice response speed determination terminal 105 may provide various services through various built-in applications. Taking the response speed analysis application that capable of providing services for determining voice response speed as an example, the following effects can be achieved when the voice response speed determination terminal 105 is running the voice response speed analysis application: firstly, acquiring a test audio file from the test audio providing terminal(s) 101, 102, 103 via the network 104; then, reading the data stream constituting the test audio files, and determining the time point when the complete data stream is read as the interaction start time point; next, determining the voice instruction information contained in the complete data stream, and determining the execution time point of the action indicated by the voice instruction information as the interaction end time point; finally, determining the speed of voice response according to the interaction start time point and the interaction end time point. Further, output the determined voice response speed to a preset position as a result.

It should be pointed out that, in addition to be obtained from the test audio providing terminals 101, 102, 103 via the network 104, the test audio file may also be pre-stored in the voice response speed determination terminal 105 in various ways (for example, after the test audio file being stored into a SD card, the SD card is inserted into a SD card slot of the voice response speed determination terminal 105). Therefore, when the voice response speed determination terminal 105 detects that these data (for example, the test audio file to be processed before starting processing) have been stored locally, the voice response speed determination terminal 105 may choose to directly obtain these data locally. In this case, the exemplary system architecture 100 may not include the test audio providing terminals 101, 102, 103 and the network 104.

The method for determining voice response speed provided by subsequent embodiments of the present disclosure is generally executed by the voice response speed determination terminal 105. Accordingly, the device for determining voice response speed is generally also provided in the voice response speed determination terminal 105. It should be emphasized that, the test audio providing terminals 101, 102, 103 and the network 104 only cause the voice response speed determination terminal 105 to obtain a test audio file. That is, after holding the test audio files, any device capable of executing the above-mentioned steps may be used as the device for determining voice response speed. For example, the test audio providing terminal(s) 101, 102, and/or 103 may also serve as the voice response determination terminal 105 at the same time.

It should be understood that the number of test audio providing terminals, network, and voice response speed determination terminals in FIG. 1 are only illustrative. According to implementation needs, there may be any number of test audio providing terminals, networks, and voice response speed determination terminals.

Please refer to FIG. 2. FIG. 2 is a flowchart of a method for determining voice response speed according to an embodiment of the present disclosure, wherein the process 200 includes the following steps:

Step 201: reading the data stream constituting the test audio file, and determining the time point when a complete data stream is read as an interaction start time point.

This step aims to obtain the data stream of the test audio file through the reading operation by the executive body (for example, the server 105 shown in FIG. 1) of the method for determining voice response speed, and determine the time point when the complete data stream is read as the interaction start time point of the voice response process.

Under normal circumstances, the test audio file is composed of binary data, and the reading operation is also to read and obtain the binary data stream that constitutes the test audio file. The time length costed by the reading operation is proportional to the size of the test audio file, and to a certain extent also depends on the reading mode. Valid information contained in the test audio file can be accurately determined without reading the complete data stream, reading the complete data stream is essentially equivalent to that the test device confirms receipt of the complete voice data sent by the user, therefore, the time point when the complete data stream is read is determined as the interaction start time point.

Compared with setting a verification time length which is used to determine whether complete voice data is received (that is, no new voice data is received within the verification time length) in the conventional manner, this embodiment does not adopt the manner of receiving voice signals from other subjects, instead, this embodiment adopts the manner of directly reading the test audio file by itself, so that an interaction start time point may be determined in time when the read of a test audio file is completed, without setting a verification time length. For example, the time point when the read on the test audio file is completed may be determined as the interaction start time point.

Step 202: determining voice instruction information contained in the complete data stream, and determining the execution time point of the action indicated by the voice instruction information as the interaction end time point.

On the basis of step 201, the purpose of step 202 aims to determine at first the voice instruction information contained in the complete data stream which is read in step 201, and then determine the execution time point of the action indicated by the voice instruction information as the interaction end time point.

Here, the voice instruction information may be "turn on the air conditioner", "play XX song", "check today's weather" and other operation instructions. Correspondingly, the corresponding action indicated by the voice instruction information may be "issue a control instruction to control the air conditioner to turn on", "turn on the player and search the song named XX to play", "open the weather application and broadcast the weather information of the day", the interaction end time point is the time point when the executive body of the above-mentioned action executes the above-mentioned action. It should be noted that the executive body of the above-mentioned action may be the above-mentioned executive body or another executive body.

There are many ways to determine the voice instruction information, such as text recognition, voice content recognition, semantic analysis, and the like.

Step 203: determining the voice response speed based on the interaction start time point and the interaction end time point.

On the basis of step 201 and step 202, step 203 aims to determine the voice response speed corresponding to the test audio file based on the interaction start time point and the interaction end time point. The time difference between the interaction start time point and the interaction end time point is usually calculated, and the time difference is determined as the voice response speed. In some scenarios, some deviation values need to be corrected on the basis of the time difference, so that the voice response speed is more consistent with the user's actual experience.

According to the method for determining the voice response speed provided by embodiments of the present disclosure, through directly reading the data stream of the test audio file containing the voice instruction information, this method takes the place of the prior art method in which the test device collects the voice signal spoken by the tester or the test device collects the sound data played by another playback device. Interaction start time point may be timely determined by reading data stream directly, without the waiting during a verification time length. Only a single test device is required to complete the whole automated determination processes, which reduces the number of test equipment, avoids the waiting during verification time length, and improves efficiency and cost for determining voice response speed.

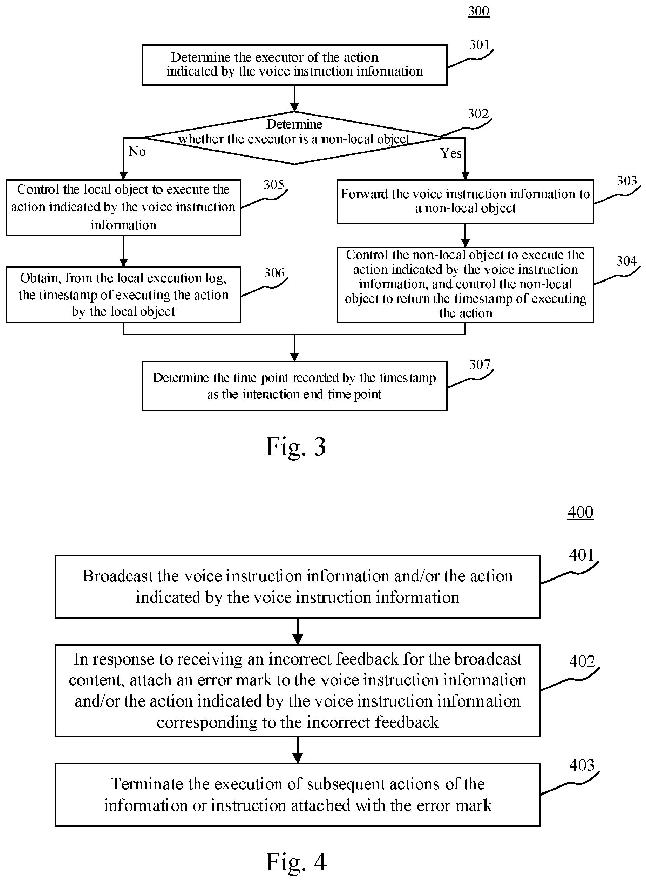

Please refer to FIG. 3. FIG. 3 is a flowchart of a method for determining an interaction end time point according to an embodiment of the present disclosure, that is, an implementation is provided for the interaction end time point determination part in step 202 in the process 200 shown in FIG. 2. The other steps in the process 200 are not adjusted. A new complete embodiment may be obtained by replacing the interaction end time point determination part in step 202 with the implementation provided in this embodiment. Here, a process 300 includes the following steps:
Step 301: determining an executor of the action indicated by the voice instruction information.

The purpose of this step is that the above-mentioned executive body determines the executor of its instruction action based on the determined voice instruction information. Assuming that the voice instruction information is "turn on the air conditioner", then the executor that executes the action of "turn on the air conditioner" should be at least a related equipment has an ability to control the air conditioner, such as "air-conditioning remote control", "home control terminal" and the like.

Step 302: determining whether the executor is a non-local object, if it is a non-local object, go to step 304, otherwise go to step 305.

On the basis of step 301, step 302 intends to determine whether the executor determined by the above-mentioned executor is a non-local object.

Here, according to whether the executive body is capable of directly controlling the execution of the indicated action, the designated executor may be classified into two categories, namely, local executor and non-local executor. A local executor is an object that the action indicated by the voice instruction can be directly controlled by the executive body. A non-local executor is an object that the action indicated by the voice instruction cannot be directly controlled by the above-mentioned executive body, but can be indirectly controlled by the above-mentioned executive body.

Still taking "turn on the air conditioner" as an example. If the above-mentioned executive body itself has the ability to control the turning on of the air conditioner, then the executor is a local object; if the above-mentioned executive body itself does not have the ability to control the turning on of the air conditioner, and it also needs another device to indirectly control the turning on of the air conditioner, then the executor is the device that has the ability to control the turning on of the air conditioner, so the executor is a non-local object.

Step 303: forwarding the voice instruction information to the non-local object.

Step 304: controlling the non-local object to execute the action indicated by the voice instruction information, and controlling the non-local object to return the timestamp of executing the action indicated by the voice instruction information.

Steps 303 and 304 are based on the judgment result of step 302 that the executor is a non-local object, aiming to forward the voice instruction information to the non-local object by the above-mentioned body, and control the non-local device to execute the corresponding action according to the received voice instruction information, and control the non-local object to return the timestamp of executing the action indicated by the voice instruction information, so that the executive body may determine the actual interaction end time point according to the timestamp.

Step 305: controlling the local object to execute the action indicated by the voice instruction information.

Step 306: obtaining, from the local execution log, the timestamp of that the local object executes the action indicated by the voice instruction information.

Steps 305 and 306 are based on the judgment result of step 302 that the executor is a local object, and aim to directly control the local device to execute the action indicated by the voice instruction information by the above-mentioned body, and obtain the timestamp for executing the indicated action by reading the local execution log, so that the above-mentioned executive body may determine the actual interaction end time point according to the timestamp.

Step 307: determining the time point recorded by the timestamp as the interaction end time point.

In this embodiment, by judging whether the executor of the action indicated by the voice instruction information is a local object or a non-local object, different implementations for determining the interaction end time point are respectively provided to cater for a more comprehensive situation.

Please refer to FIG. 4. FIG. 4 is a flowchart of a method for receiving incorrect feedback through broadcasting and performing corresponding processing targeted at the incorrect feedback according to an embodiment of the present disclosure, and provides an additional processing method for the voice instruction information and the action indicated by the voice instruction information in step 202 in the process 200 shown in FIG. 2. With the help of this processing method, whether there is any error in the determination of the voice instruction information and the determination of the action indicated by the voice instruction information may be determined, so as to avoid the execution of the subsequent invalid actions. The other steps in the process 200 are not adjusted. A new and complete embodiment may be obtained by adding the implementation provided in this embodiment into the corresponding part of the process 200. Here, a process 400 includes the following steps:
Step 401: broadcasting the voice instruction information and/or the action indicated by the voice instruction information.

This step intends to inform the tester of the currently determined voice instruction information and/or the action indicated by the voice instruction information through voice broadcasting by the above-mentioned executive body, so that the tester may understand, through the voice broadcasting manner, that the determined voice instruction information and/or the determined action indicated by the voice instruction information is correct or not. Of course, in addition to adopting the manner such as voice broadcasting, other manners such as projecting the determined voice instruction information and/or the determined action indicated by the voice instruction information on a screen, or outputting the determined voice instruction information and/or the determined action indicated by the voice instruction information on a screen, to inform the tester about the above information, which may be flexibly selected according to the actual situation. This embodiment is only an example of an implementation.

Step 402: in response to receiving an incorrect feedback on the broadcasted content, attaching an error mark to the voice instruction information and/or the action indicated by the voice instruction information corresponding to the incorrect feedback.

On the basis of step 401, step 402 intends to attaching an error mark to the voice instruction information and/or the action indicated by the voice instruction information corresponding to the incorrect feedback when the above-mentioned executive body receives the incorrect feedback targeting at the broadcasted content.

For example, the currently broadcasted voice instruction information is "query browser", and the tester knows in advance that the real voice instruction information contained in the test audio file is "query weather", then it is easy to determine that an error occurs during that the above-mentioned executive body determines the voice instruction information. In the case of that an error occurs in the determining the voice instruction information, the determined action indicated by the determined voice instruction, the execution of the determined action, and voice response speed determined later are all invalid. Therefore, in order to avoid the execution of subsequent invalid actions, this step aims to attaching an error mark to voice instruction information and/or the action indicated by the voice instruction information.

Step 403: terminating the execution of the subsequent actions of the information or instruction attached with the error mark.

On the basis of step 402, step 403 aims to terminate the execution of the subsequent actions of the information or instruction attached with the error mark by the above-mentioned executive body, so as to avoid the execution of the subsequent invalid actions.

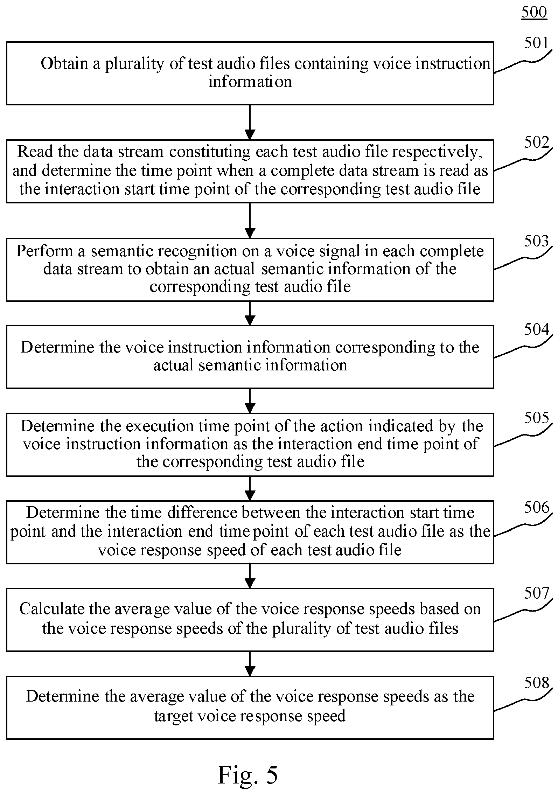

Please refer to FIG. 5. FIG.5 is a flowchart of another method for determining voice response speed according to an embodiment of the present disclosure. Here, a process 500 includes the following steps:
Step 501: obtaining a plurality of test audio files containing voice instruction information.
Step 502: reading the data stream constituting each test audio file respectively, and determining the time point when each complete data stream is read as the interaction start time point of the corresponding test audio file.
Step 503: performing semantic recognition on a voice signal in each complete data stream to obtain actual semantic information of each test audio file.
Step 504: determining the voice instruction information corresponding to the actual semantic information.
Steps 503 and 504 aim to obtain the actual semantic information of each test audio file through semantic recognition by the above-mentioned executive body, and then determine the voice instruction information according to the actual semantic information.

In order to improve the semantic recognition effect and the accuracy of the actual semantic information recognized by the semantic recognition, a semantic recognition model trained based on machine learning and deep learning may also be used. But in order to balance the accuracy and the time consumed in the semantic recognition at the same time, a comprehensive processing method may be formulated according to the complexity of voice signal. An implementation includes but is not limited to:

Extracting the voice signal from the complete data stream;

In response to the actual complexity of the voice signal exceeds the preset complexity, calling a pre-trained semantic recognition model configured on a cloud server and inputting the voice signal into the pre-trained semantic recognition model, where the pre-trained semantic recognition model is used to characterize the corresponding relationship between the voice signal and the semantic information; and

Receiving the actual semantic information returned by the semantic recognition model.

That is, the above-mentioned embodiment only calls the semantic recognition model for voice signals with complexity exceeding the preset complexity to determine the actual semantic information. On the contrary, the voice information with complexity less than the preset complexity may use the conventional semantic recognition method with a shorter consumed time to determine the actual semantic information, so as to better balance the recognition accuracy and recognition speed.

Step 505: determining the execution time point of the action indicated by the voice instruction information as the interaction end time point of the corresponding test audio file.

Step 506: determining the time difference between the interaction start time point and the interaction end time point of each test audio file as the voice response speed of the each test audio file.

Step 507: calculating the average value of the voice response speeds according to the voice response speeds of the plurality of test audio files.

Step 508: determining the average value of the voice response speeds as the target voice response speed.

Different from the foregoing embodiments, this embodiment aims mainly to the situation where there are a plurality of test audio files, and calculates the average value by separately obtaining the voice response speed of each test audio file, and finally takes the average value as the target voice response speed that is more accurate.

It should be noted that the method for determining the voice instruction information through semantic recognition provided in the above-mentioned steps 503 and 504 does not necessarily exist in conjunction with other steps in this embodiment, and it may also directly replace the relevant part for determining voice instruction information in step 202 in the process 200.

In order to deepen understanding, an embodiment of the present disclosure also provides a detailed application scenario, and provides an implementation which includes:
Step 1: obtaining an audio test set.

The test set includes audio files prepared in advance, and the format of the audio files is an encoding format that may be processed by the voice interaction system, such as the PCM format. Taking in-vehicle application scenario as an example, exemplary voice test set includes: "Navigate to Window of the World.pcm", "call China Mobile.pcm", "I want to listen to pop music.pcm", and the like.

Step 2: turning on voice recognition function of a test equipment, then the voice recognition module starts to parse the recorded audio data, regularly reads the binary data of the audio files in the test set, and sends the binary audio data to the semantic recognition module.

Existing solutions require a microphone (MIC) of the hardware device to collect external sounds, and then send the collected audio data to the recognition module. In embodiments of present disclosure, only need to read binary data stream constating an audio file in the audio test set and send the binary data stream to the recognition module. The recognition module performs corresponding recognition operations according to whether the recognition requires connecting to the network such as that described in steps 503 and 504, and then returns the semantic analysis result.

Step 3: after the test audio file is read to the end of the file, recording the voice interaction start time point. Once the audio data is completely read, which is equivalent to the end of voice recognition, and the process of semantic analysis begins, waiting for the return of the semantic result.

Step 4: determining the time point of obtaining semantic results from the logged data as the interaction end time point.

Step 5: calculating the voice interaction response speed according to the above-mentioned interaction start time point and the above-mentioned interaction end time point.

Compared with conventional methods, the technical solution provided in this embodiment only needs to prepare the test set audio file once and the test set audio file maybe reused; and only one terminal device is required for performing the above-mentioned test steps, while other playback source devices are not required, which can avoid the problem of inaccurate calculation result caused by the interference of environmental noise. Since another playback source and manual intervention are not needed, automated output of test results is achieved. The difference in the performance of different tested terminal devices has little effect on the result. Because there is no need to consider the time consumption of UI (interface) rendering and CPU synthesis of synthetic voice (TTS voice), only the start time point and end time point of the voice response need to be recorded.

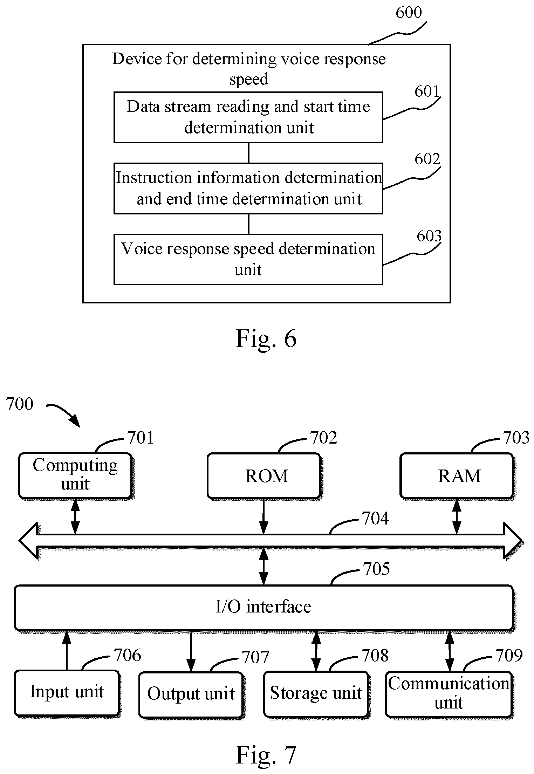

With further reference to FIG. 6. As an implementation of the methods shown in the above-mentioned figures, an embodiment of the present disclosure provides a device for determining voice response speed. The device embodiment corresponds to the method embodiment shown in FIG. 2.The device for determining voice response speed may be applied to various electronic devices.

As shown in FIG. 6, the device 600 for determining voice response speed of this embodiment may include: a data stream reading and start time determination unit 601, an instruction information determination and end time determination unit 602, and a voice response speed determination unit 603. Here, the data stream reading and start time determination unit 601 is configured to read the data stream constituting the test audio file, and determine the time point when the complete data stream is read as the interaction start time point; the instruction information determination and end time determination unit 602 is configured to determine the voice instruction information contained in the complete data stream, and determine the execution time point of the action indicated by the voice instruction information as the interaction end time point; the voice response speed determination unit 603 is configured to determine the voice response speed based on the interaction start time point and the interaction end time point.

In this embodiment, in the device 600 for determining the voice response speed: the detailed processes of the data stream reading and start time determination unit 601, the instruction information determination and end time determination unit 602, and the voice response speed determination unit 603 and the technical effects thereof may be referred to the relevant descriptions of steps 201-203 in the corresponding embodiment of FIG. 2 respectively, and details are not repeated here.

In some optional implementations of this embodiment, the information determination and end time determination unit 602 may include an end time instruction determination subunit configured to determine the execution time point of the action indicated by the voice instruction information as the interaction end time point. The end time determination subunit may be further configured as:
Determining the executor of the action indicated by the voice instruction information; where the executor is a local object or a non-local object;
In response to the executor being the non-local object, forwarding the voice instruction information to the non-local object;
Controlling the non-local object to execute the action indicated by the voice instruction information, and controlling the non-local object to return the timestamp of executing the action indicated by the voice instruction information; and
Determining the time point recorded by the timestamp as the interaction end time point.

In some optional implementations of this embodiment, the device 600 for determining voice response speed may further include:
A broadcast unit, which is configured to broadcast voice instruction information and/or actions indicated by the voice instruction information;
An error marking unit, which is configured to, in response to receiving an incorrect feedback for the broadcasted content, attach an error mark to the voice instruction information and/or the action indicated by the voice instruction information corresponding to the incorrect feedback; and
A subsequent action termination unit, which is configured to terminate the execution of the subsequent actions of the information or instructions attached with the error mark.

In some optional implementations of this embodiment, the instruction information determination and end time determination unit 602 may include an instruction information determination subunit configured to determine the voice instruction information contained in the complete data stream, and the instruction information determination subunit may include:
A semantic recognition module, which is configured to perform semantic recognition on the voice signal in the complete data stream to obtain actual semantic information; and
A voice instruction information determination module, which is configured to determine the voice instruction information corresponding to the actual semantic information.

In some optional implementations of this embodiment, the semantic recognition module may be further configured as:
Extracting the voice signal from the complete data stream;
In response to the actual complexity of the voice signal exceeds the preset complexity, calling a pre-trained semantic recognition model configured on a cloud server and inputting the voice signal into the pre-trained semantic recognition model; here the semantic recognition model is used to characterize the corresponding relationship between the voice signal and the semantic information; and
Receiving the actual semantic information returned by the semantic recognition model.

In some optional implementations of this embodiment, in response to a plurality of test audio files, the method further includes:
An average value calculation unit, which is configured to calculate the average value of the voice response speeds based on the voice response speeds of the plurality of test audio files; and
A target voice response speed determination unit, which is configured to determine the average value of the voice response speeds as the target voice response speed.

In some optional implementations of this embodiment, the device 600 for determining voice response speed may further include:
A test audio file obtaining unit, which is configured to obtain the test audio file containing the voice instruction information before reading the data stream constituting the test audio file.

This embodiment exists as a device embodiment corresponding to the above-mentioned method embodiment. The device for determining voice response speed provided by this embodiment, through directly reading the data stream of the test audio file containing the voice instruction information, takes the place of the prior art method in which the test device collects the voice signal spoken by the tester or the test device collects the sound data played by another playback device. Interaction start time point may be timely determined by reading data stream directly, without the waiting during a verification time length. Only a single test device is required to complete the whole automated determination processes, which reduces the number of test equipment, avoids the waiting time during the verification time length, and improves efficiency and cost for determining voice response speed.

According to an embodiment of the present disclosure, an electronic device is provided. The electronic device comprises at least one processor; and a memory, in communication connection with the at least one processor; where, the memory stores instructions executable by the at least one processor, the instructions, when executed by the at least one processor, cause the at least one processor to implement the method according to any one of the above-mentioned method for determining voice response speed.

According to an embodiment of the present disclosure, a non-transitory computer readable storage medium is provided. The computer readable storage medium stores computer instructions that are used to enable the computer to execute the method for determining voice response speed described in any of the above-mentioned embodiments.

An embodiment of the present disclosure provides a computer program product, which may implement the method for determining the voice response speed described in any of the above-mentioned embodiments when the computer program is executed by a processor.

Fig. 7 is a schematic block diagram of an exemplary electronic device 700 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in FIG. 7, the device 700 includes a computing unit 701, which can perform various appropriate actions and processing according to a computer program stored in a read-only memory (ROM) 702 or a computer program loaded from a storage unit 708 into a random access memory (RAM) 703. In the RAM 703, various programs and data required for the operation of the device 700 can also be stored. The calculation unit 701, the ROM 702, and the RAM 703 are connected to each other through a bus 704. An input/output (I/O) interface 705 is also connected to the bus 704.

Multiple components in the device 700 are connected to the I/O interface 705, including: an input unit 706, such as a keyboard, a mouse, and the like; an output unit 707, such as various types of displays, speakers, and the like; and a storage unit 708, such as a magnetic disk, an optical disk, and the like; and a communication unit 709, such as a network card, a modem, a wireless communication transceiver, and the like. The communication unit 709 allows the device 700 to exchange information/data with other devices through a computer network such as the Internet and/or various telecommunication networks.

The computing unit 701 may be various general-purpose and/or special-purpose processing components with processing and computing capabilities. Some examples of computing unit 701 include, but are not limited to, central processing unit (CPU), graphics processing unit (GPU), various dedicated artificial intelligence (AI) computing chips, various computing units that run machine learning model algorithms, digital signal processing (DSP), and any appropriate processor, controller, microcontroller, or the like. The computing unit 701 executes the various methods and processes described above, such as the method for determining voice response speed. For example, in some embodiments, the method for determining voice response speed may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded into the RAM 703 and executed by the computing unit 701, one or more steps of the method for determining voice response speed described above can be executed. Alternatively, in other embodiments, the computing unit 701 may be configured to execute the method for determining voice response speed through any other suitable means (for example, by means of firmware).

The various implementations of the systems and technologies described herein can be implemented in digital electronic circuit systems, integrated circuit systems, field programmable gate arrays (FPGA), application-specific integrated circuits (ASIC), application-specific standard products (ASSP), system-on-chip SOC, load programmable logic device (CPLD), computer hardware, firmware, software, and/or their combination. These various embodiments may include: being implemented in one or more computer programs, the one or more computer programs may be executed and/or interpreted on a programmable system including at least one programmable processor, the programmable processor can be a dedicated or general-purpose programmable processor that can receive data and instructions from the storage system, at least one input device, and at least one output device, and transmit the data and instructions to the storage system, the at least one input device, and the at least one output device.

The program code used to implement the method of the present disclosure can be written in any combination of one or more programming languages. These program codes can be provided to the processors or controllers of general-purpose computers, special-purpose computers, or other programmable data processing devices, so that when the program codes are executed by the processors or controllers, the functions/operations specified in the flowcharts and/or block diagrams are implemented. The program code can be executed entirely on a machine or partly executed on the machine, partly executed on the machine and partly executed on a remote machine as an independent software package, or entirely executed on a remote machine or server.

In the context of the present disclosure, a machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination of the foregoing. More specific examples of machine-readable storage media may include electrical connections based on one or more wires, portable computer disks, hard drives, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In order to provide interaction with a user, the systems and technologies described herein may be implemented on a computer, the computer has: a display apparatus (e.g., CRT (cathode ray tube) or LCD (liquid crystal display) monitor for displaying information to the user; and a keyboard and a pointing apparatus (for example, a mouse or trackball), the user may use the keyboard and the pointing apparatus to provide input to the computer. Other kinds of apparatuses may also be used to provide interaction with the user; for example, the feedback provided to the user may be any form of sensory feedback (for example, visual feedback, auditory feedback, or tactile feedback); and may use any form (including acoustic input, voice input, or tactile input) to receive input from the user.

The systems and technologies described herein may be implemented in a computing system (e.g., as a data server) that includes back-end components, or a computing system (e.g., an application server) that includes middleware components, or a computing system (for example, a user computer with a graphical user interface or a web browser, through which the user may interact with the embodiments of the systems and technologies described herein) that includes front-end components, or a computing system that includes any combination of such back-end components, middleware components, or front-end components. The components of the system may be interconnected by any form or medium of digital data communication (e.g., a communication network). Examples of the communication network include: local area network (LAN), wide area network (WAN), Internet, and blockchain network.

The computer system may include a client and a server. The client and the server are generally far from each other and usually interact through a communication network. The client and server relationship is generated by computer programs operating on the corresponding computer and having client-server relationship with each other. The server may be a cloud server, A Server can be a cloud server, also known as a cloud computing server or cloud host. It is a host product in the cloud computing service system to solve the defects of traditional physical host and Virtual Private Server (VPS), which are difficult to manage and weak in business scalability.

Through directly reading the data stream of the test audio file containing the voice instruction information, embodiments of the present disclosure take the place of the prior art method in which the test device collects the voice signal spoken by the tester or the test device collects the sound data played by another playback device. Interaction start time point may be timely determined by reading data stream directly, without the waiting during a verification time length. Only a single test device is required to complete the whole automated determination processes, which reduces the number of test equipment, avoids the waiting during the verification time length, and improves efficiency and cost for determining voice response speed.

It should be understood that various forms of processes shown above may be used to reorder, add, or delete steps. For example, the steps described in embodiments of the present disclosure may be performed in parallel, sequentially, or in different orders, as long as the desired results of the technical solution disclosed in the present disclosure can be achieved, no limitation is made herein.

The above embodiments do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of this disclosure shall be included in the protection scope of this disclosure.

## Claims

1. A method for determining voice response speed, the method comprising:
reading (201) a data stream constituting a test audio file, and determining a time point when a complete data stream is read as an interaction start time point;
determining (202) voice instruction information contained in the complete data stream, and determining an execution time point of an action indicated by the voice instruction information as an interaction end time point; and
determining (203) the voice response speed based on the interaction start time point and the interaction end time point.

2. The method of claim 1, wherein, the determining (201) an execution time point of an action indicated by the voice instruction information as an interaction end time point, comprises:
determining (301) an executor of the action indicated by the voice instruction information, wherein the executor is a local object or a non-local object;
in response to the executor being the non-local object, forwarding (303) the voice instruction information to the non-local object;
controlling (304) the non-local object to execute the action indicated by the voice instruction information, and controlling the non-local object to return a timestamp of executing the action indicated by the voice instruction information; and
determining (307) a time point recorded by the timestamp as the interaction end time point.

3. The method of claim 1, wherein, the method further comprises:
broadcasting (401) the voice instruction information and/or the action indicated by the voice instruction information;
in response to receiving an incorrect feedback for a broadcasted content, attaching (402) an error mark to the voice instruction information and/or the action indicated by the voice instruction information corresponding to the incorrect feedback; and
terminating (403) execution of subsequent actions of the information or instruction attached with the error mark.

4. The method of claim 1, wherein, the determining (202) voice instruction information contained in a complete data stream, comprises:
performing semantic recognition on a voice signal in the complete data stream to obtain actual semantic information; and
determining the voice instruction information corresponding to the actual semantic information.

5. The method of claim 4, wherein, the performing semantic recognition on a voice signal in the complete data stream to obtain actual semantic information, comprises:
extracting the voice signal from the complete data stream;
in response to an actual complexity of the voice signal exceeds a preset complexity, calling a pre-trained semantic recognition model configured on a cloud server and inputting the voice signal into the pre-trained semantic recognition model, wherein the pre-trained semantic recognition model is used to characterize a corresponding relationship between the voice signal and the semantic information; and
receiving the actual semantic information returned by the semantic recognition model.

6. The method of claim 1, wherein, in response to a plurality of test audio files, the method further comprises:
calculating (507) an average value of the voice response speeds based on the voice response speeds of the plurality of test audio files; and
determining (508) the average value of the voice response speeds as a target voice response speed.

7. The method of any one of claims 1 to 6, wherein, before reading the data stream constituting the test audio file, the method further comprises:
obtaining the test audio file containing the voice instruction information.

8. An electronic device, comprising:
at least one processor; and
a memory, in communication connection with the at least one processor; wherein,
the memory stores instructions executable by the at least one processor, the instructions, when executed by the at least one processor, cause the at least one processor to implement the method for determining voice response speed according to any one of claims 1-7.

9. A non-transitory computer readable storage medium, storing computer instructions thereon, the computer instructions, when executed by a computer, cause the computer to execute the method for determining voice response speed according to any one of claims 1-7.

10. A computer program product comprising a computer program, the computer program, when executed by a processor, implements the method for determining voice response speed according to any one of claims 1-7.
